# EUROPÄISCHE PATENTSCHRIFT

(11) **EP 3 547 222 B1**
(45) Veröffentlichungstag und Bekanntmachung des Hinweises auf die Patenterteilung: **16.08.2023**
(21) Anmeldenummer: 19161492.4
(22) Anmeldetag: 08.03.2019
(51) Int. Cl.: G06K 19/00

(54) **IDENTIFIKATIONSVORRICHTUNG FÜR EIN WERKZEUG ODER EIN AGGREGAT**
IDENTIFICATION DEVICE FOR A TOOL OR A UNIT
DISPOSITIF D'IDENTIFICATION POUR UN OUTIL OU UN AGRÉGAT

(30) Priorität: 29.03.2018 DE 102018107536
(43) Veröffentlichungstag der Anmeldung: 02.10.2019
(73) Patentinhaber: Turck Holding GmbH, 58553 Halver (DE)
(72) Erfinder: Moder, Ralf, 70806 Kornwestheim (DE); Steiner, René, 58119 Hagen (DE)
(74) Vertreter: DTS Patent- und Rechtsanwälte Schnekenbühl und Partner mbB

(56) Entgegenhaltungen:
- EP-A1- 1 339 014
- DE-A1- 19 910 935
- DE-T2- 69 324 093
- DE-U1-202006 002 269
- US-A1- 2005 230 110
- US-A1- 2013 186 243

## Beschreibung

Die vorliegende Erfindung betrifft eine Identifikationsvorrichtung für ein Werkzeug oder ein Aggregat (im folgenden wird der Einfachheit halber nur von Werkzeugen gesprochen), insbesondere für ein Werkzeug in einer Holz-, Kunststoff oder Metallbearbeitungsmaschine sowie ein Verfahren zur Identifikation eines Werkzeugs.

Aus der EP 1 746 530 B1 ist eine Vorrichtung zur Werkzeug- und Aggregatidentifikation bekannt, die den erkannten Nachteil vermeiden will, dass bei rotierenden Werkzeugen eine Identifikation durch einen seitlich angebrachten RFID-Transponder ein Auslesen nur bei passender Orientierung erfolgen kann. Zur Lösung schlägt die EP 1 746 530 B1 daher vor, einen RFID-Chip über den gesamten Umfang einer Werkzeugaufnahme anzubringen, so dass der RFID-Chip unabhängig von der Orientierung der Werkzeugaufnahme durch einen seitlich vorgesehenen Schreib- und Lesegerät ausgelesen werden kann. Nachteilig ist, dass dieser RFID-Chip in seinen Abmessungen sehr groß ist und auf Metall aufgeklebt werden muss - dies führt bei der Belastung während der Bearbeitung dazu, dass sich der ringförmige RFID-Chip oftmals löst. Die US 2005/230110 A1 beschreibt ein System zur Identifikation einer Vorrichtung. Die DE 20 2006 002 269 U1 beschreibt eine Werkzeugaufnahme und einen Werkzeughalter für eine CNC-gesteuerte Bearbeitungsmaschine.

Aufgabe der vorliegenden Erfindung war es daher, eine Identifikationsvorrichtung für ein rotierendes Werkzeug zu schaffen, das die Nachteile des Standes der Technik vermeidet und insbesondere robuster eine Identifizierung unabhängig von der Orientierung der Werkzeugaufnahme ermöglicht.

Diese Aufgabe wird erfindungsgemäß gelöst durch die Merkmale der unabhängigen Ansprüche. Vorteilhafte Ausgestaltungen sind in den Unteransprüchen angegeben.

Die Werkzeugaufnahme ist um ihre Längsachse drehbar und bevorzugt selbst im wesentlichen rotationssymmetrisch. Die Längsachse der Werkzeugaufnahme ist damit bevorzugt die Rotationsachse. Bevorzugt handelt es sich bei der Werkzeugaufnahme um einen Hohlschaftkegel. Bevorzugt umfasst die Werkzeugaufnahme einen Körper und einen Schaft, in den ein Werkzeug eingespannt werden kann. Die Werkzeugaufnahme weist einen Durchmesser auf. Dieser ist im Bereich des Körpers größer als im Bereich des Schaftes. Der maximale Durchmesser liegt dann im Bereich des Körpers der Werkzeugaufnahme vor.

Die Werkzeugaufnahme weist an ihrer Seite, bevorzugt an ihrem äußeren Bereich des maximalen Durchmessers, eine Ausnehmung auf. Die Ausnehmung ist bevorzugt als Bohrung oder Sackloch ausgebildet. Die Ausnehmung ist bevorzugt senkrecht zur Längsachse der Werkzeugaufnahme ausgebildet. Bevorzugt befindet sich die Ausnehmung auf der Höhe der Stelle des maximalen Durchmessers, insbesondere also an der Seite des Körpers der Werkzeugaufnahme. Besonders bevorzugt befindet sich die Ausnehmung an einer Stelle der Werkzeugaufnahme, an der Durchmesser der Werkzeugaufnahme mindestens 70% oder 80%, bevorzugt mindestens 90%, des maximalen Durchmessers beträgt.

In die Ausnehmung ist ein RFID-Transponder derart eingesetzt, dass die Übertragungskurve des RFID-Transponders nach oben und/oder unten von der Ausnehmung aus gesehen in Richtung der Längsachse des Werkzeugs verläuft. Die Übertragungskurve ist die Visualisierung des Empfangsbereiches des RFID-Transponders im Raum. Die Übertragungskurve ist der 3-dimensionale Bereich, in dem eine Kommunikation zwischen Datenträger und Schreib-/ Lesekopf möglich ist. Nahe des RFID-Transponders ist die Empfindlichkeit für eine Kommunikation am höchsten und an den Rändern der Übertragungskurve ist noch ein Minimum der benötigten Empfindlichkeit bzw. Energie zur Kommunikation vorhanden.

Diese Übertragungskurve bzw. die Geometrie des Empfangsbereiches des RFID-Transponders kann durch die Wahl des RFID-Transponders, die Einbaulage des RFID-Transponders, die angelegte Temperatur, Einbaulagen von Tag und Antenne bzw. Schreib-Lesekopf, Ausrichtung von Tag zu Antenne bzw. Schreib-Lesekopf, umgebene Metalle, Motoren, Antriebe sowie EMV allgemein beeinflusst werden. Anders als im Stand der Technik geht es darum, die Übertragungskurve nach oben und/oder unten von der Ausnehmung aus gesehen in Richtung der Längsachse des Werkzeugs auszubilden, während im Stand der Technik eine Übertragungskurve präferiert wird, die senkrecht von der Längsachse der Werkzeugaufnahme weg ausgebildet ist. Durch eine keulenförmige Ausbildung der Übertragungskurve nach oben und/ oder unten wird ein Bereich oberhalb und/ oder unterhalb der Werkzeugaufnahme bzw. des Körpers der Werkzeugaufnahme erreicht.

Es ist daneben ein Schreib-Lesekopf (Antenne) zur Kommunikation, d.h. zum Datenaustausch mit dem RFID-Transponder vorgesehen, wobei der Schreib-Lesekopf oberhalb und/oder unterhalb der Werkzeugaufnahme angeordnet ist. Bevorzugt ist der Schreib-Lesekopf oberhalb der Werkzeugaufnahme und damit oberhalb des Körpers der Werkzeugaufnahme angeordnet. Dadurch ist es möglich, dass der RFID-Transponder, dessen Übertragungskurve bzw. Strahlungsgeometrie nach oben hin ausgerichtet ist, mit dem Schreib-Lesekopf kommunizieren kann.

Dadurch dass sich der Schreib-Lesekopf bevorzugt über mindestens den gesamten Durchmesser der Werkzeugaufnahme erstreckt und die Übertragungskurve bzw. die Strahlungsgeometrie des RFID-Transponders nach oben und/ oder unten reicht, ist eine Kommunikation in jeder Position um 360° des (rotierenden) Werkzeugs möglich, da es jetzt egal ist, an welcher Stelle sich die Ausnehmung innerhalb der Werkzeugaufnahme befindet, in der der RFID-Transponder angeordnet ist. In jeder Position liegt der Schreib-Lesekopf im Bereich der Übertragungskurve bzw. der Strahlgeometrie des RFID Transponders, der nur auf einer Seite der Werkzeugaufnahme angeordnet ist. Damit ist eine Unabhängigkeit von der Orientierung der Werkzeugaufnahme erreicht.

In einem weiteren Ausführungsbeispiel der Erfindung ist der RFID-Transponder ein ferritischer RFID-Transponder. Das magnetisierbare bzw. ferritische Material schirmt die Sende- und/oder Empfangsvorrichtung und/oder deren Antenne gegen metallische Gegenstände in der Nähe ab. So wird die Wirksamkeit bzw. Reichweite oder Erfassbarkeit der Sende- und/oder Empfangsvorrichtung gewahrt oder zumindest vor allzu starker Einschränkung bewahrt. Durch den Ferrit werden insbesondere magnetische Felder gerichtet bzw. die Gegeniduktivität erhöht.

In einem weiteren Ausführungsbeispiel der Erfindung weist der RFID-Transponder eine stabförmige Form auf, bevorzugt ist der Kern des Transponders bzw. der Ferritkern stabförmig, wobei der Transponder selbst inklusive des ihn umgebenden Gehäuses rund sein kann und einen Durchmesser von bevorzugt 10mm aufweist. Der RFID-Transponder ist bevorzugt parallel zur Längsachse der Werkzeugaufnahme in die Ausnehmung eingesetzt. Dies bedeutet, dass die Längsachse des stabförmigen RFID-Transponders bzw. des stabförmigen Kerns des Transponders parallel zur Längsachse der Werkzeugaufnahme ausgerichtet ist und sich in der Peripherie der Werkzeugaufnahme befindet.

Bevorzugt kann die Lage des stabförmigen Transponders um bis zu 5 Grad, besonders bevorzugt um bis zu 10 Grad und insbesondere bevorzugt um bis zu 20 Grad um jede seiner zwei Achsen neben seiner Längsachse abweichen.

Bevorzugt wird hierdurch eine Abstrahlgeometrie mit zwei bipolaren Maxima geschaffen, bei der ein Maximum in Richtung oberhalb der Werkzeugaufnahme und ein Maxima in Richtung unterhalb der Werkzeugaufnahme vom RFID-Transponder aus seitlich erzeugt wird.

In einem weiteren Ausführungsbeispiel der Erfindung weist der stabförmige RFID-Transponder eine Länge von weniger als 10mm auf. Auf diese Weise ist es möglich, den RFID-Transponder auch in vorhandene Standardlöcher unterzubringen, wie beispielsweise die standardmäßig vorhandenen Öffungen in einem Hohlschaftkegel.

In einem weiteren Ausführungsbeispiel der Erfindung erstreckt sich der Schreib-Lesekopf über mindestens 80%, 100%, 110%, bevorzugt 120%, besonders bevorzugt 130% des Durchmessers der Werkzeugaufnahme. Damit wird ein negativer oder positiver Überstand des Scheib-Lesekopfes in Bezug auf den maximalen Durchmesser der Werkzeugaufnahme - und damit die Position des RFID-Transponders geschaffen. Durch diesen Überstand befindet sich ein Teil des Schreib-Lesekopfes immer in dem Bereich, in den der RFID-Transponder hin abstrahlt, d.h. dass sich die Abstrahlgeometrie des RFID-Transponders immer in einem Abschnitt des Schreib-Lesekopfes befindet. Da sich die Übertragungskurve bzw. die Abstrahlgeometrie nur an einer Seite der Werkzeugaufnahme befindet, überschneidet sich diese auch nur an einer Stelle mit dem Schreib-Lesekopf, was aber ausreicht, damit unabhängig von der Rotationsausrichtung der Werkzeugaufnahme in jeder Position eine Überschneidung der Übertragungskurve bzw. die Abstrahlgeometrie mit dem Schreib-Lesekopf stattfindet. Besonders bevorzugt ist ein Überstand von mehr als 5 mm, besonders bevorzugt mehr als 10 mm, insbesondere bevorzugt von mehr als 20 mm vorgesehen.

Der Schreib-Lesekopf kann bevorzugt rechteckig bzw. auch quadratisch ausgebildet sein, bevorzugt mit einer Kantenlänge von 60mm, bevorzugt 80mm, besonders bevorzugt 100mm. Besonders bevorzugt ist der Schreib-Lesekopf kreisförmig ausgebildet. Damit folgt er in der Form der Rotationssymmetrie der rotierenden Werkzeugaufnahme. Besonders bevorzugt ist der Schreib-Lesekopf als Kreisscheibe mit einem inneren Durchmesser Ri und einem äußeren Durchmesser Ra ausgebildet ist. Ri ist dabei dann bevorzugt kleiner gleich der Durchmesser der Werkzeugaufnahme.

Besonders bevorzugt ist die Werkzeugaufnahme (15) in Form eines Hohlschaftkegels ausgebildet. Damit ist es möglich, vorhandene Systeme zum Werkzeugwechseln einzusetzen.

In einem weiteren Ausführungsbeispiel ist eine Vorrichtung vorgesehen, die mehrere Werkzeugaufnahmen umfasst, die in einer Wechselaufnahme aufnehmbar sind und wobei die Wechselaufnahme derart verfahren werden kann, dass die einzelnen in der Wechselaufnahme aufgenommenen Werzeugaufnahmen den Schreib-Lesekopf passieren.

Eine Wechselaufnahme ist bevorzugt ein Magazin, in dem mehrere Werkzeugaufnahmen abgelegt sind und die von einer Spindel des Bearbeitungsgerätes aufgenommen werden können. Die Wechelsaufnahme bzw. das Magazin ist bevorzugt in Form einer Revolvertrommel ausgebildet, so dass der Transport der einzelnen Werkzeugaufnahmen durch Drehung der Wechselaufnahme erfolgen kann.

Besonders bevorzugt ist der Schreib-Lesekopf an einer Station angebracht, die von der Wechselaufnahme passiert wird, so dass die Werkzeugaufnahmen den Schreib-Lesekopf passieren, d.h. über- oder unterfahren. Damit ist eine konsekutive und diskrete Auslesung der einzelnen RFID-Transponder an den Werkzeughaltern durch die Wechselaufnahme möglich. Damit sind die einzelnen Werkzeughalter während des Überfahrprozesses identifizierbar, ohne dass ein Hineinverfahren des Schreib-Lesekopfes bei angehaltenem Magazin erfolgen muss und ohne dass eine spezielle Rotationsrichtung bei seitlich angebrachtem Schreib- Lesekopf einzuhalten wäre.

Besonders bevorzugt ist das Werkzeug mit der Werkzeugaufnahme in eine Bearbeitungsmaschine für die Holz- und/oder Kunststoff- und/oder Metallindustrie einsetzbar.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Darstellung einer Vorrichtung zur Identifikation eines Werkzeugs mit einer Werkzeugaufnahme im Schnitt entlang der Längsachse der Werkzeugaufnahme;
- Fig. 2: eine Detailansicht eines RFID-Transponders in der Ausnehmung der Werkzeugaufnahme und
- Fig. 3: eine Darstellung einer Vorrichtung zur Identifikation eines Werkzeugs mit einer Wechselaufnahme für mehrere Werkzeugaufnahmen.

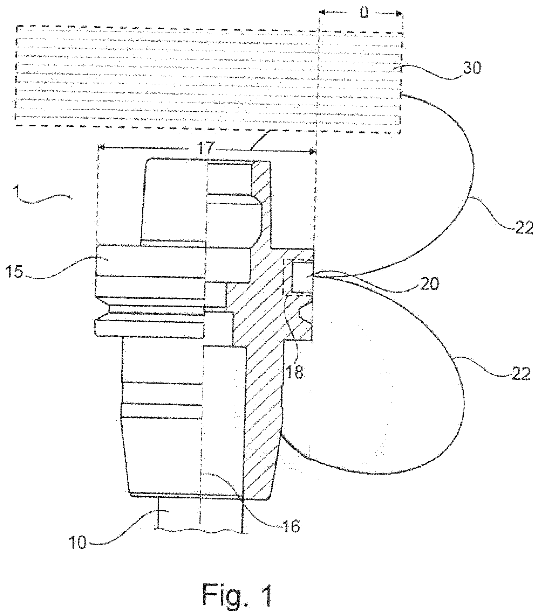

Figur 1 ist eine schematische Darstellung einer Vorrichtung 1 zur Identifikation eines Werkzeugs 10 mit einer Werkzeugaufnahme 15 im Schnitt entlang der Längsachse 16 der Werkzeugaufnahme 15. Eine Werkzeugaufnahme 15 besteht aus einem Körper und einem Schaft, in den ein Werkzeug 10 eingespannt ist. Die Werkzeugaufnahme 15 ist in der Art eines Hohlschaftkegels HSK ausgebildet. Die Werkzeugaufnahme 15 weist einen maximalen Durchmesser 17 auf. An einer Seite der Werkzeugaufnahme 15 - in der Abbildung auf der rechten Seite - ist eine Ausnehmung 18 vorgesehen, in die ein RFID-Transponder 20 eingesetzt ist. Oberhalb der Werkzeugaufnahme 15 ist ein Schreib-Lesekopf 30 angeordnet. Dieser Schreib-Lesekopf 30 weist gegenüber der Werkzeugaufnahme 15 und insbeosndere gegenüber dem maximalen Durchmesser 17 der Werkzeugaufnahme 15 einen Überstand Ü auf und erstreckt sich rechts und links von der Werkzeugaufnahme über diese um den Überstand Ü hinaus.

Die Werkzeugaufnahme 15 ist im wesentlichen rotationssymmetrisch ausgebildet und weist eine Längsachse 16 auf. Der RFID-Transponder 20 ist in der Ausnehmung 18 am Rand auf einer Seite der Werkzeugaufnahme im Bereich der Peripherie des maximalen Durchmessers 17 der Werkzeugaufnahme 15 angeordnet. Die Abstrahl- bzw. Übertragungskurve 22 des RFID-Transponders 20 ist als Schnitt der räumlichen Geometrie der Sendeleistung des RFID-Transponders 20 im Raum dargestellt.

Wenn sich der Werkzeughalter 15 nun unter dem Schreib- Lesekopf 30 befindet, wie in Figur 1 dargestellt, dann überschneidet sich die Übertragungskurve 22 mit der räumlichen Ausdehnung des Schreib- Lesekopfs 30 - damit können der Schreib- Lesekopf 30 und der RFID-Transponder 20 miteinander kommunizieren und die Daten übertragen. Diese Daten können bevorzugt aus folgender Gruppe gewählt werden: Art des Werkzeugs, Identifikationsnummer, Abmessungen, maximale Drehzahl, maximaler Vorschub, Einsatzhäufigkeit, Standzeit, Lebensdauer. Besonders bevorzugt ist der Schreib- Lesekopf 30 mit einer Steuereinheit (nicht dargestellt) verbunden, über die der Betrieb der Bearbeitungsvorrichtung und der Werkzeugwechsel gesteuert werden kann.

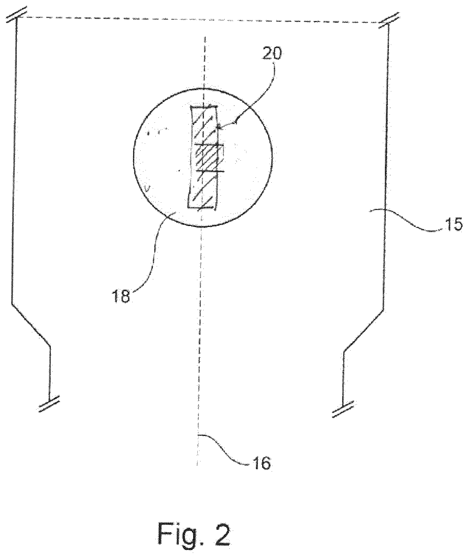

Figur 2 ist eine Detailansicht eines RFID-Transponders 20, der in der Ausnehmung 18 der Werkzeugaufnahme 15 angeordnet ist. Es handelt sich um eine Draufsicht auf die Ausnehmung 18. Der Kern des RFID-Transponder 20 weist eine stabförmige Form auf und ist parallel zur Längsachse 16 orientiert.

Mit dieser Einbaugeometrie wird eine Abstrahlungsgeometrie erreicht, wie sie in Figur 1 mit dem Bezugszeichen 22 im Schnitt mit der dort dargestellten Ebene dargestellt ist. Damit ist eine Überschneidung dieser Abstrahlgeometrie mit dem Schreib- Lesekopf garantiert.

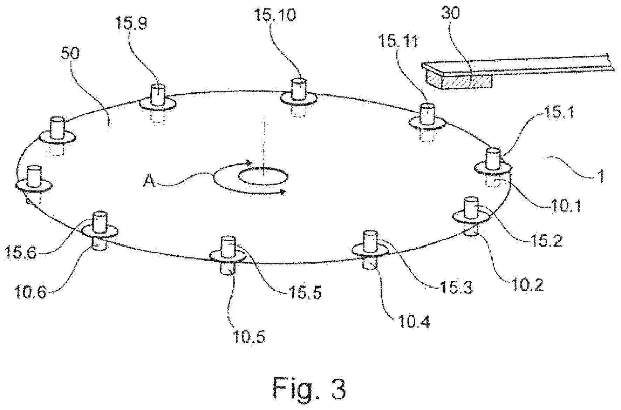

Figur 3 ist eine Darstellung einer Vorrichtung 1 zur Identifikation eines Werkzeugs 10 mit einer Wechselaufnahme 50 für mehrere Werkzeugaufnahmen 15. Die verschiedenen Werkzeugaufnahmen sind mit den Bezugszeichen 15.1 bis 15.11 bezeichnet. In den Werkzeugaufnahmen 15.i sind entsprechende Werkzeuge 10.i eingespannt. An einer Station ist ein Schreib- Lesekopf 30 angeordnet. Dieser ist oberhalb der Werkzeugaufnahmen 15.i angeordnet. In Figur 3 steht er bei der Position der Wechselaufnahme 50 augenblicklich über der Werkzeugaufnahme 15.1.

Es ist ebenfalls mögich, den RFID Reader, d.h. den Schreib-Lesekopf 30 unterhalb der Wechselaufnahme 50 zu montieren. Dies ist besonders vorteilhaft, wenn die Werzeugaufnahme 15.i um 180 Grad gedreht in die Wechselaufnahme 50 hineingesteckt ist.

Durch Drehen der Wechselaufnahme 50 ist es nun möglich, ein Werkzeug 10.i mit der Werkzeugaufnahme 15.i durch den Schreib-Lesekopf 30 zu identifizieren, ohne dass es eines Abtastschrittes durch den Schreib-Lesekopf 30 bedarf und damit kann die Identifikation im Durchlaufbetrieb erfolgen, d.h. die Wechselaufnahme kann entlang des Pfeiles A gedreht werden und hierbei kann ohne dass die Wechselaufnahme angehalten werden muss das Werkzeug identifiziert werden.

Mit der erfindungsgemäßen Vorrichtung ist es damit möglich, an einer Maschine (z. B. Holzbearbeitungsmaschine) ein Werkzeug (z. B. ein Hohlschaftkegel HSK) mit RFID zu identifizieren. Diese Identifikation beeinflusst die Funktion der Maschine nicht, d.h. der HSK kann in jeder Rotationslage identifiziert werden und es werden keine zusätzlichen mechanischen Anbauten zur Ausrichtung bzw. zum Verfahren der Identifikations-Komponenten (RFID-Tag, SLK) benötigt. Somit ist eine Identifikation im sogenannten Durchlaufbetrieb möglich. Dies erfolgt bevorzugt durch die Ausrichtung eines ferritischen RFID-Transponders in eine Werkzeugaufnahme (Hohlschaftkegel) in Verbindung mit der Ausrichtung eines Schreib-Lesekopfes ober- oder unterhalb der Werkzeugaufnahme, so dass die Identifikation des Datenträgers unabhängig von der Rotationslage der HSK möglich ist.

Es werden keine zusätzlichen mechanischen Anbauten zur Ausrichtung bzw. zum Verfahren der Identifikations-Komponenten (Tag, SLK) benötigt. Durch diese Anordnung des RFD Transponders (Tag) und SLK ist eine Identifikation im sog. Durchlaufbetrieb möglich.

### Bezugszeichenliste

- 1: Vorrichtung zur Identifikation eines Werkzeugs
- 10: Werkzeug
- 15: Werkzeugaufnahme
- 15': Hohlschaftkegel
- 16: Längsachse der Werkzeugaufnahme
- 17: Durchmesser der Werkzeugaufnahme
- 18: Ausnehmung in der Werkzeugaufnahme
- 20: RFID-Transponder
- 22: Übertragungskurve
- 30: Schreib-Lesekopf
- 40: Bearbeitungsmaschine
- 50: Wechselaufnahme für mehrere Werkzeugaufnahmen

## Patentansprüche

1. System mit einer Werkzeugaufnahme (15) und einer Vorrichtung (1) zur Identifikation eines Werkzeugs (10), das in der Werkzeugaufnahme (15) aufgenommen ist, wobei
die Werkzeugaufnahme (15) eine Längsachse (16) und einen Durchmesser (17) aufweist, wobei
die Werkzeugaufnahme (15) an ihrer Seite eine Ausnehmung (18) aufweist, die senkrecht zur Längsachse (16) der Werkzeugaufnahme (15) ausgebildet ist und in der ein RFID-Transponder (20) eingesetzt ist; und wobei
die Vorrichtung (1) einen Schreib-Lesekopf (30) zur Kommunikation mit dem RFID-Transponder (20) aufweist, wobei der Schreib-Lesekopf (30) von der Ausnehmung (18) aus gesehen in Richtung der Längsachse (16) der Werkzeugaufnahme (15) oberhalb oder unterhalb der Werkzeugaufnahme (15) angeordnet ist und sich über mindestens 70% des gesamten Durchmessers (17) der Werkzeugaufnahme (15) erstreckt,
**dadurch gekennzeichnet, dass**
der RFID-Transponder (20) eine keulenförmige, entlang der Längsachse (16) der Werkzeugaufnahme (15) verlaufende Übertragungskurve (22) aufweist, das heißt einen dreidimensionalen Bereich, in dem eine Kommunikation zwischen einem Datenträger des RFID-Transponders (20) und dem Schreib-Lesekopf (30) möglich ist, wobei
der RFID-Transponder (20) derart eingesetzt ist, dass sich die keulenförmige Übertragungskurve (22) des RFID-Transponders (20) mit der räumlichen Ausdehnung des Schreib-Lesekopfs (30) überschneidet.

2. System nach Anspruch 1, wobei der RFID-Transponder (20) ein ferritischer RFID-Transponder (20) ist, mit einem ferritischen Material, welches die Sende- und/oder Empfangsvorrichtung und/oder deren Antenne gegen metallische Gegenstände in der Nähe abschirmt, wobei durch den Ferrit magnetische Felder gerichtet werden beziehungsweise die Gegeninduktivität erhöht wird.

3. System nach einem der vorhergehenden Ansprüche, wobei der RFID-Transponder (20) eine stabförmige Form aufweist und parallel zur Längsachse (16) der Werkzeugaufnahme (15) in die Ausnehmung (18) eingesetzt ist.

4. System nach Anspruch 3, wobei der stabförmige RFID-Transponder (20) eine Länge von weniger als 10mm aufweist.

5. System nach einem der vorhergehenden Ansprüche, wobei sich der Schreib-Lesekopf (30) über mindestens 80%, bevorzugt mindestens 100%, besonders bevorzugt mindestens 110% des Durchmesser (17) der Werkzeugaufnahme (15) erstreckt.

6. System nach einem der vorhergehenden Ansprüche, wobei der Schreib-Lesekopf (30) als Kreisscheibe mit einem inneren Durchmesser (Ri) und einem äußeren Durchmesser (Ra) ausgebildet ist.

7. System nach einem der vorhergehenden Ansprüche, wobei die Werkzeugaufnahme (15) in Form eines Hohlschaftkegels (15') ausgebildet ist.

8. System nach einem der vorhergehenden Ansprüche, wobei die Vorrichtung (1) mehrere Werkzeugaufnahmen (15) umfasst, die in einer Wechselaufnahme (50) aufnehmbar sind und wobei die Wechselaufnahme (50) derart verfahren werden kann, dass die einzelnen in der Wechselaufnahme (50) aufgenommenen Werkzeugaufnahmen (15) den Schreib-Lesekopf (30) passieren.

9. System nach einem der vorhergehenden Ansprüche, wobei das Werkzeug (10) mit der Werkzeugaufnahme (15) in eine Bearbeitungsmaschine (40) für die Holz- und/oder Kunststoff- und/oder Metallindustrie einsetzbar ist.

10. Bearbeitungsmaschine (40) für die Holz- und/oder Kunststoff- und/oder Metallindustrie, umfassend ein System mit einer Werkzeugaufnahme (15) und einer Vorrichtung (1) zur Identifikation eines Werkzeugs (10) nach einem der Ansprüche 1 bis 9.

11. Verfahren zur Identifikation eines Werkzeugs (10), das in eine Werkzeugaufnahme (15) aufgenommen ist, wobei die Werkzeugaufnahme (15) eine Längsachse (16) und einen Durchmesser (17) aufweist mit den Schritten:
- Vorsehen einer Ausnehmung (18) an einer Seite der Werkzeugaufnahme (15), wobei die Ausnehmung senkrecht zur Längsachse (16) der Werkzeugaufnahme (15) ausgebildet ist
- Einsetzen eines RFID-Transponder (20) in die Ausnehmung; und
- Vorsehen eines Schreib-Lesekopfs (30) zur Kommunikation mit dem RFID-Transponder (20), wobei der Schreib-Lesekopf (30) von der Ausnehmung (18) aus gesehen in Richtung der Längsachse (16) der Werkzeugaufnahme (15) oberhalb oder unterhalb der Werkzeugaufnahme (15) angeordnet ist und sich über mindestens 70% des gesamten Durchmessers (17) der Werkzeugaufnahme (15) erstreckt,
**dadurch gekennzeichnet, dass**
der RFID-Transponder (20) eine keulenförmige, entlang der Längsachse (16) der Werkzeugaufnahme (15) verlaufende Übertragungskurve (22) aufweist, das heißt einen dreidimensionalen Bereich, in dem eine Kommunikation zwischen einem Datenträger des RFID-Transponders (20) und dem Schreib-Lesekopf (30) möglich ist;
- Vorbeiführen der Werkzeugaufnahme oberhalb oder unterhalb des Schreib-Lesekopfs (30), wobei der RFID-Transponder (20) derart eingesetzt ist, dass sich die keulenförmige Übertragungskurve (22) des RFID-Transponders (20) mit der räumlichen Ausdehnung des Schreib-Lesekopfs (30) überschneidet;
- Kommunikation zwischen dem Schreib-Lesekopf (30) und dem RFID-Transponder (20) zur Identifikation des Werkzeugs (10).

## Claims

1. System with a tool holder (15) and a device (1) for the identification of a tool (10) which is accommodated in the tool holder (15), wherein
the tool holder (15) has a longitudinal axis (16) and a diameter (17), wherein
the tool holder (15) has a recess (18) on its side, which is formed perpendicular to the longitudinal axis (16) of the tool holder (15) and in which an RFID transponder (20) is inserted; and wherein
the device (1) has a read/write head (30) for communication with the RFID transponder (20), wherein the read/write head (30) is arranged above or below the tool holder (15) seen from the recess (18) in the direction of the longitudinal axis (16) of the tool holder (15) and extends over at least 70% of the whole diameter (17) of the tool holder (15), **characterized in that**
the RFID transponder (20) has a club-shaped transfer curve (22) running along the longitudinal axis (16) of the tool holder (15), i.e. a three-dimensional area in which a communication between a data carrier of the RFID transponder (20) and the read/write head (30) is possible, wherein
the RFID transponder (20) is inserted in such a way that the club-shaped transfer curve (22) of the RFID transponder (20) overlaps with the spatial extent of the read/write head (30).

2. System according to claim 1, wherein the RFID transponder (20) is a ferritic RFID transponder (20) with a ferritic material, which shields the transmitting and/or receiving device and/or their antenna from metallic objects nearby, wherein magnetic fields are directed through the ferrite or the mutual inductance is increased.

3. System according to one of the preceding claims, wherein the RFID transponder (20) has a rod-shaped form and is inserted into the recess (18) parallel to the longitudinal axis (16) of the tool holder (15).

4. System according to claim 3, wherein the rod-shaped RFID transponder (20) has a length of less than 10 mm.

5. System according to one of the preceding claims, wherein the read/write head (30) extends over at least 80%, preferably at least 100%, particularly preferably at least 110% of the diameter (17) of the tool holder (15).

6. System according to one of the preceding claims, wherein the read/write head (30) is formed as a circular disc with an inner diameter (Ri) and an outer diameter (Ra).

7. System according to one of the preceding claims, wherein the tool holder (15) is formed in the shape of a hollow shank taper (15').

8. System according to one of the preceding claims, wherein the device (1) comprises several tool holders (15) which can be accommodated in an exchange holder (50) and wherein the exchange holder (50) can be moved in such a way that the individual tool holders (15) accommodated in the exchange holder (50) pass the read/write head (30).

9. System according to one of the preceding claims, wherein the tool (10) with the tool holder (15) can be inserted into a processing machine (40) for the wood and/or plastic and/or metal industry.

10. Processing machine (40) for the wood and/or plastic and/or metal industry, comprising a system with a tool holder (15) and a device (1) for the identification of a tool (10) according to one of claims 1 to 9.

11. Method for the identification of a tool (10) which is accommodated in a tool holder (15), wherein the tool holder (15) has a longitudinal axis (16) and a diameter (17), with the steps of:
- providing a recess (18) on one side of the tool holder (15), wherein the recess is formed perpendicular to the longitudinal axis (16) of the tool holder (15)
- inserting an RFID transponder (10) into the recess; and
- providing a read/write head (30) for communication with the RFID transponder (20), wherein the read/write head (30) is arranged above or below the tool holder (15) seen from the recess (18) in the direction of the longitudinal axis (16) of the tool holder (15) and extends over at least 70% of the whole diameter (17) of the tool holder (15),
**characterized in that**
the RFID transponder (20) has a club-shaped transfer curve (22) running along the longitudinal axis (16) of the tool holder (15), i.e. a three-dimensional area in which a communication between a data carrier of the RFID transponder (20) and the read/write head (30) is possible;
- moving the tool holder past the read/write head (30) above or below it, wherein the RFID transponder (20) is inserted in such a way that the club-shaped transfer curve (22) of the RFID transponder (20) overlaps with the spatial extent of the read/write head (30);
- communicating between the read/write head (30) and the RFID transponder (20) for the identification of the tool (10).

## Revendications

1. Système avec un logement d'outil (15) et un dispositif (1) d'identification d'un outil (10) qui est logé dans le logement d'outil (15) ; dans lequel
le logement d'outil (15) comporte un axe longitudinal (16) et un diamètre (17) ; dans lequel
le logement d'outil (15) comporte au niveau de son côté un évidement (18) réalisé perpendiculairement à l'axe longitudinal (16) du logement d'outil (15) et dans lequel un transpondeur RFID (20) est utilisé ; et dans lequel
le dispositif (1) comporte une tête de lecture-écriture (30) servant à la communication avec le transpondeur RFID (20), dans lequel la tête de lecture-écriture (30) est disposée, vue depuis l'évidement (18), en direction de l'axe longitudinal (16) du logement d'outil (15) au-dessus ou en dessous du logement d'outil (15) et s'étend sur au moins 70 % du diamètre total (17) du logement d'outil (15) ;
**caractérisé en ce que** :
le transpondeur RFID (20) présente une courbe de transmission (22) en forme de lobe s'étendant le long de l'axe longitudinal (16) du logement d'outil (15), c'est-à-dire une zone tridimensionnelle dans laquelle une communication est possible entre un support de données du transpondeur RFID (20) et la tête de lecture-écriture (30) ; dans lequel
le transpondeur RFID (20) est utilisé de telle sorte que la courbe de transmission (22) en forme de lobe du transpondeur RFID (20) intersecte l'extension dans l'espace de la tête de lecture-écriture (30).

2. Système selon la revendication 1, dans lequel le transpondeur RFID (20) est un transpondeur RFID (20) ferritique, avec une matière ferritique qui protège le dispositif d'envoi et/ou réception et/ou son antenne contre les objets métalliques à proximité, dans lequel les champs magnétiques sont orientés et/ou la contre-inductivité est augmentée du fait de la ferrite.

3. Système selon l'une quelconque des revendications précédentes, dans lequel le transpondeur RFID (20) présente une forme en forme de tige et est inséré dans l'évidement (18) parallèlement à l'axe longitudinal (16) du logement d'outil (15).

4. Système selon la revendication 3, dans lequel le transpondeur RFID (20) en forme de tige présente une longueur inférieure à 10 mm.

5. Système selon l'une quelconque des revendications précédentes, dans lequel la tête de lecture-écriture (30) s'étend sur au moins 80 %, de façon préférée sur au moins 100 %, de façon particulièrement préférée sur au moins 110 % du diamètre (17) du logement d'outil (15).

6. Système selon l'une quelconque des revendications précédentes, dans lequel la tête de lecture-écriture (30) est réalisée sous la forme d'un disque circulaire avec un diamètre intérieur (Ri) et un diamètre extérieur (Ra).

7. Système selon l'une quelconque des revendications précédentes, dans lequel le logement d'outil (15) est réalisé sous la forme d'un cône de tige creuse (15').

8. Système selon l'une quelconque des revendications précédentes, dans lequel le dispositif (1) comprend plusieurs logements d'outil (15) pouvant être logés dans un logement interchangeable (50) et dans lequel le logement interchangeable (50) peut être déplacé de telle sorte que les différents logements d'outil (15) logés dans le logement interchangeable (50) passent par la tête de lecture-écriture (30).

9. Système selon l'une quelconque des revendications précédentes, dans lequel l'outil (10) peut être utilisé avec le logement d'outil (15) dans une machine de traitement (40) servant pour l'industrie du bois et/ou de la matière plastique et/ou du métal.

10. Machine de traitement (40) servant pour l'industrie du bois et/ou de la matière plastique et/ou du métal, comprenant un système avec un logement d'outil (15) et un dispositif (1) d'identification d'un outil (10) selon l'une quelconque des revendications 1 à 9.

11. Procédé d'identification d'un outil (10) qui est logé dans un logement d'outil (15), dans lequel le logement d'outil (15) comporte un axe longitudinal (16) et un diamètre (17), avec les étapes suivantes :
- mise à disposition d'un évidement (18) au niveau d'un côté du logement d'outil (15), dans lequel l'évidement est réalisé perpendiculairement à l'axe longitudinal (16) du logement d'outil (15) ;
- insertion d'un transpondeur RFID (20) dans l'évidement ; et
- mise à disposition d'une tête de lecture-écriture (30) servant à la communication avec le transpondeur RFID (20), dans lequel la tête de lecture-écriture (30) est disposée, vue depuis l'évidement (18), en direction de l'axe longitudinal (16) du logement d'outil (15) au-dessus ou en dessous du logement d'outil (15) et s'étend sur au moins 70 % du diamètre total (17) du logement d'outil (15) ;
**caractérisé en ce que** :
le transpondeur RFID (20) forme une courbe de transmission (22) en forme de lobe s'étendant le long de l'axe longitudinal (16) du logement d'outil (15), c'est-à-dire une zone tridimensionnelle dans laquelle une communication est possible entre un support de données du transpondeur RFID (20) et la tête de lecture-écriture (30) ;
- guidage en avant du logement d'outil au-dessus ou en dessous de la tête de lecture-écriture (30), dans lequel le transpondeur RFID (20) est inséré de telle sorte que la courbe de transmission (22) en forme de lobe du transpondeur RFID (20) intersecte l'extension dans l'espace de la tête de lecture-écriture (30) ;
- communication entre la tête de lecture-écriture (30) et le transpondeur RFID (20) en vue d'identifier l'outil (10).
